Europäisches Patentamt

European Patent Office

Office européen des brevets

(11) Numéro de publication: **0 277 379 B1**

# (12) FASCICULE DE BREVET EUROPEEN

(45) Date de publication de fascicule du brevet:
03.04.91

(21) Numéro de dépôt: 87202488.0

(22) Date de dépôt: 11.12.87

(51) Int. Cl.5: **F16B 12/26**, F16B 21/07,
//A47B96/06,A47K10/10,
F16B7/04

---

(54) Dispositif d'assemblage rapide pour l'accrochage amovible d'un objet sur un support.

---

(30) Priorité: 07.01.87 FR 8700532

(43) Date de publication de la demande:
10.08.88 Bulletin 88/32

(45) Mention de la délivrance du brevet:
03.04.91 Bulletin 91/14

(84) Etats contractants désignés:
DE ES FR GB IT SE

(56) Documents cités:
FR-A- 1 469 101    FR-A- 1 530 643
FR-A- 1 535 391    FR-A- 2 026 850
FR-A- 2 039 646    FR-A- 2 543 627
FR-A- 2 556 423    FR-A- 2 579 694
US-A- 1 740 830    US-A- 3 251 110
US-A- 3 675 293

(73) Titulaire: MOULAGES PLASTIQUES DU MIDI
Société à Responsabilité Limitée
10, boulevard de Joffrery
F-31600 Muret(FR)

(72) Inventeur: Bares, Jean-Jacques
1895, chemin de Beaumont Eaunes
F-31600 Muret(FR)
Inventeur: Sicard, Michel
16, rue des Glières
F-31270 Cugnaux(FR)

(74) Mandataire: Barre, Philippe
Cabinet Barre-Gatti-Laforgue 95 rue des
Amidonniers
F-31069 Toulouse Cédex(FR)

EP 0 277 379 B1

## Description

La présente invention concerne un dispositif d'assemblage rapide pour l'accrochage amovible d'un objet sur un support, du type comportant deux éléments aptes à être solidarisés respectivement auxdits objet et support.

Il existe un grand nombre de dispositifs pour l'accrochage d,un objet sur un support. Ces dispositifs, tels qu'en particulier décrits dans les brevets français n° 2 039 646, 1 469 101, 1 530 643, 1 535 391, 2 556 423, 2 543 627, 2 579 694, comprennent deux éléments solidarisés respectivemment sur l'object et sur le support et dotés de moyens de coopération permettant d'assembler et de désunir rapidement cet objet et ce support. Toutefois, l'utilisation de chacun de ces dispositifs est limitée à des applications bien définies et aucun d'eux ne présente un caractère universel permettant de fixer des objets de nature et de formes très diverses sur un support donné. De plus, aucun de ces dispositifs ne cumule les avantages suivantes: très fable coût de revient, assemblage rigide ne nécessitant aucun organe mobile, sécurité vis-àvis d'un désasemblage accidentel tout en permettant un désassemblage très rapide en cas de nécessité et aspect esthétique permettant d'utiliser ces dispositifs en tout lieu.

Il existe toutefois des dispositifs, tels que décrits dans le brevet FR 2.026.850, ayant les caractéristiques du préamble de la revendication 1, dont la conception permet d'allier certaines de ces avantages. Ces dispositifs comprennant principalement une platine dotée de moyens de fixation sur un support et d'une glissière , et un console support d'objets dotée d'un coulisseau de forme adaptée pour coulisser dans la glissière de la platine. En outre, suivante la forme de cette console, plusiers tyes d'objets peuvent être fixé sur un support. De plus, ce dispositifs est doté d'un cadre interposé entre la platine et la console en vue de lui conférer un aspect esthétique. Toutefois, le mode d'assemblage du coulisseau et de la platine ne fournit aucune garantie vis-à-vis d'un désassemblage accidental, ce qui limite, notamment, l'emploi de ces dispositifs à des applications spécifiques ne reqérant aucune sécurité.

La présente invention a pour objectif de combler ces lacunes en fournissant un dispositifs d'assemblage qui allie les avantages précités et dont la conception modulaire autorise l'assemblage d'objets de nature et de formes très variées.

A cet effet, l'invention concerne un dispositif d'assemblage rapde pour l'accrochage amovible d'un objet sur un support, du type comportant deux éléments aptes à être solidarisés respectivement auxdits objet et support :
- un élément, dit femelle, solidarisé au support et comprenant une platine dotée de moyens de fixation adaptés pour l'appliquer et la fixer sur ledit support , ladite platine comportant deux joues latérales formant une glissière,
- un élément, dit mâle solidarisé à l'objet et comprenant :
  * un coulisseau de forme adaptée pour coulisser dans la glissiére de l'élément femelle,
  * des moyens de maintien de l'objet, portés par le coulisseau et de formes adaptées à la nature et à la forme dudit objet,
  ledit dispositif étant caractérisé en ce que :
- la platine comprend une lanquette flexible s'étandant en saille sur la platine et apte à se déformer élastiquement par rapport à ladite platine, ladite lanquette étant dotée d'un ergot d'encliquetage,
- le coulisseau comprend une lumière apte à loger l'ergot d'encliquetage de la lanquette,
- la glissière de la platine et le coulisseau présentant respectivement des extrémitiés, dites hautes, de formes conjugées et de sections supérieures à celles de leur partie courante, de façon à obtenir un blocage sans jeu dudit coulisseau dans ladite glissière.

Un même élément femelle fixé un support tel qu'une paroi de volume, un mur, un profilé peut donc constituer un élément fixe sur lequel peuvent s'assembler des objets de formes diverses portés par l'élément mâle. La nature des objets pouvant être accrochés dépendant uniquement de la forme des organes de maintain portés par le coulisseau, on conçoit que les applications d'un tel dispositif peuvent être très diverses ; parmi ces applications, on peut citer, par exemple, l'assemblage d'éléments dans le domaine de l'ameublement (panneaux de meubles, profilés , étagères...), l' accrochage d'objets divers (tableaux, clefs, objets tels que bouteilles ...à mettre hors de portée des enfants...), le support d'objets divers (barres de porte-serviettes, poignées, tablettes...).

La forme des moyens de coopération (ergot d'encliquetage, lumière du coulisseau) des éléments mâle et femelle peut être étudiée en fonction de ces applications. Elle peut, en effet, permettre un assemblage réversible, ne nécessitant qu' une traction sur le coulisseau pour entraîner le désassemblage.

Toutefois, selon un mode de réalisation préférential, ces moyens de coopération sont prévus pour fournir un arrêt positif entre les éléments mâle et femelle. A cet effet :
- l'ergot d'encliquetage de la languette et la lumière du coulisseau comportent respectivement une face plane et un bord, dits inférieurs, de formes conjuguées, et adaptés pour coopérer selon un plan sensiblement orthogonal au plan de la platine,

- la languette comporte un tronçon, dit inférieur, agencé de façon à s'étendre dans le prolongement de la platine et présentant une zone de poussée adaptée pour permettre de repousser manuellement ladite languette vers ladite platine.

Ainsi, l'on obtient un assemblage irréversible garantissant une sécurité absolue vis-à-vis d'un désassemblage accidentel, par le simple engagement du coulisseau à l'intérieur de la glissière délimitée par les joues latérales. Le désassemblage est obtenu, quant à lui, par une traction sur le coulisseau après avoir effectué une simple pression manuelle sur la zone de poussée de la languette.

Par ailleurs, ce dispositif est avantageusement doté d'un boîtier amovible de forme adaptée pour loger l'élément femelle, ledit boîtier étant doté latéralement de crochets d'encliquetage internes aptes à s'insérer dans des logements ménagés extérieurement sur les joues latérales dudit élément femelle.

Ce boîtier indépendant des éléments mâle et femelle, peut donc être conçu de façon à permettre une intégration harmonieuse du dispositif d'assemblage et ce quels que soient l'application de ce dernier et son lieu d'emplacement.

D'autres caractéristiques et avantages de l'invention se dégageront de la description détaillée qui suit et de l'examen des dessins annexés qui en présentent, à titre d'exemples non limitatifs, un mode de réalisation préférentiel et des exemples d'application. Sur ces dessins qui font partie intégrante de la présente description :

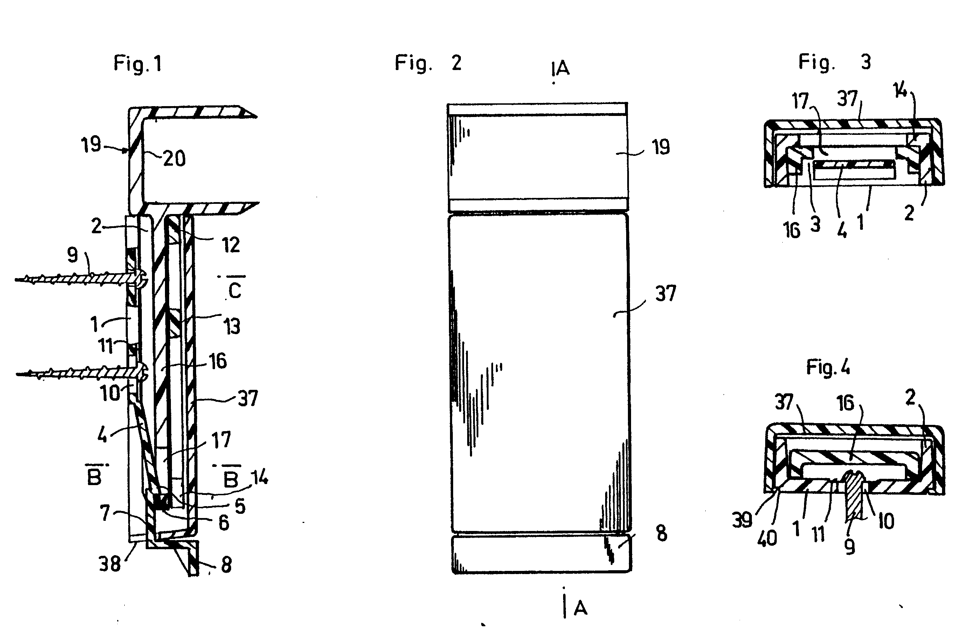

- la figure 1 est une coupe longitudinale par un plan AA d'un dispositif conforme à l'invention, dans sa position assemblée,
- la figure 2 en est une vue de face,
- la figure 3 en est une coupe transversale par un plan BB,
- la figure 4 en est une coupe transversale par un plan CC,

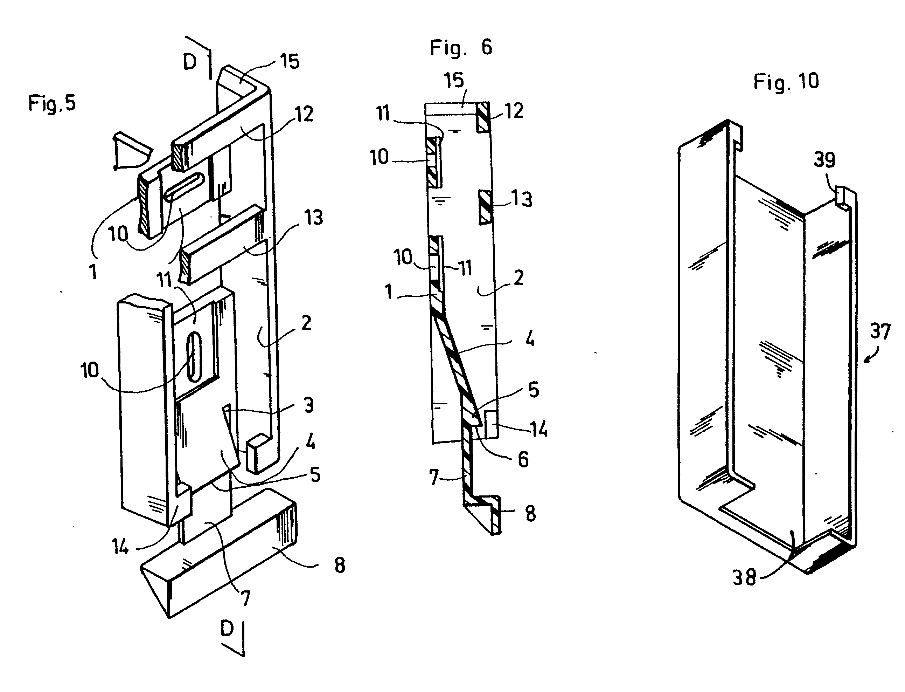

- la figure 5 est une vue en perspective, avec des parties arrachées, de l'élément femelle de ce dispositif,
- la figure 6 est une coupe longitudinale par un plan DD de cet élément femelle,
- la figure 7 est une vue en perspective, avec des parties arrachées, de l'élément mâle de ce dispositif,
- la figure 8 est une coupe longitudinale par un plan EE de cet élément mâle,
- la figure 9 en est une coupe transversale par un plan FF,
- la figure 10 est une vue en perspective d'un boîtier destiné à être associé au dispositif,

- les figures 11 à 16 sont des vues en perspective illustrant quelques applications de ce dispositif d'assemblage.

(Pour simplifier la description, le dispositif sera décrit fixé sur un support vertical, étant entendu que l'inclinaison de ce support peut-être quelconque).

Le dispositif, objet de l'invention, comprend deux éléments, mâle et femelle, destiné à être fixés respectivement sur un support et un objet, en vue de permettre un accrochage amovible dudit objet sur ledit support. Ces éléments sont moulés par injection d'une matière thermoplastique, telle que du polyamide.

L'élément femelle destiné à être fixé sur le support comporte une platine 1 dotée de deux joues latérales 2. Cette platine est dotée dans sa moitié inférieure de deux fentes 3 longitudinales, délimitant une languette centrale 4 flexible s'étendant obliquement par rapport à cette platine et apte à se déformer élastiquement par rapport à ladite platine.

La languette 4 est prolongée vers le bas par un tronçon inférieure 7 en retrait par rapport à ladite languette de façon à définir un enfoncement 6 au niveau de la face de jonction entre ce tronçon inférieur et cette languette. Cette disposition permet de constituer un ergot d'encliquetage 5 possédant une face inférieure 6 orthogonale à la platine 1, au niveau de l'extrémité basse de la languette 4.

Le tronçon inférieur, en forme de L est lui-même prolongé par un retour vertical 8 parallèle à la platine. Ce retour 8 forme une zone de poussée permettant de repousser manuellement la languette 4 vers la platine 1.

La fixation de la platine 1 sur le support est assurée par deux vis de fixation 9 à tête ronde venant se loger dans deux alésages 10 oblongs dont les axes longitudinaux sont orthogonaux de façon à permettre d'ajuster la position de cette platine sur son support.

Ces alésages 10 débouchent sur la face avant de la platine au niveau d'enfoncements 11 adaptés pour définir une portée plane pour la tête des vis de fixation 9. Cette disposition est préférable à celle consistant à prévoir des reçus de têtes fraisées qui entraînent obligatoirement un fluage de matière et donc une moins bonne résistance à l'arrachement.

Il est à noter que lorsque les efforts à l'arrachement auquel doit être soumis le dispositif d'assemblage sont faibles, les vis de fixation peuvent être avantageusement remplacées par un ruban adhésif apte à adhérer, d'une part, sur la face arrière de la platine 1 et, d'autre part, sur le support.

Par ailleurs, les joues latérales 2 sont reliées au niveau de leurs bords latéraux opposés à la platine 1, par une paroi frontale 12, 13, 14 formant une glissière. Cette paroi frontale est constituée de deux entretoises 12, 13 disposées respectivement au niveau de l'extrémité haute des joues 2 et dans une portion comprise entre les deux alésages 10. Elle comprend également deux retours 14 en regard, au niveau de l'extrémité inférieure des joues 2.

En dernier lieu, les joues latérales 2 et l'entretoise supérieure 12 sont chanfreinées intérieurement, vers leur extrémité haute 15 dans un but explicité ci-dessous.

L'élément mâle destiné à porter l'objet comporte, quant à lui, un coulisseau 16 de forme adaptée pour être engagé dans la glissière de l'élément femelle. Ce coulisseau 16 présente une section transversale en forme de U adaptée pour dégager un espace entre ledit coulisseau 16 et la face avant de la platine 1. Cet espace autorise ainsi la saillie des têtes des vis de fixation 9 sur la face avant de la platine. En outre, de par sa forme en U, le coulisseau présente une bonne résistance à la flexion.

Ce coulisseau 16 est doté d'une lumière ménagée dans sa moitié inférieure, et présentant un bord inférieur de forme conjuguée à la face inférieure de l'ergot d'encliquetage 5, de façon à coopérer avec celle-ci selon un plan sensiblement orthogonal à la platine 1.

De plus, l'extrémité haute 18 du coulisseau 16 présente une forme pyramidale de section supérieure à celle de sa partie courante et conjuguée de la section de la partie chanfreinée de l'élément femelle.

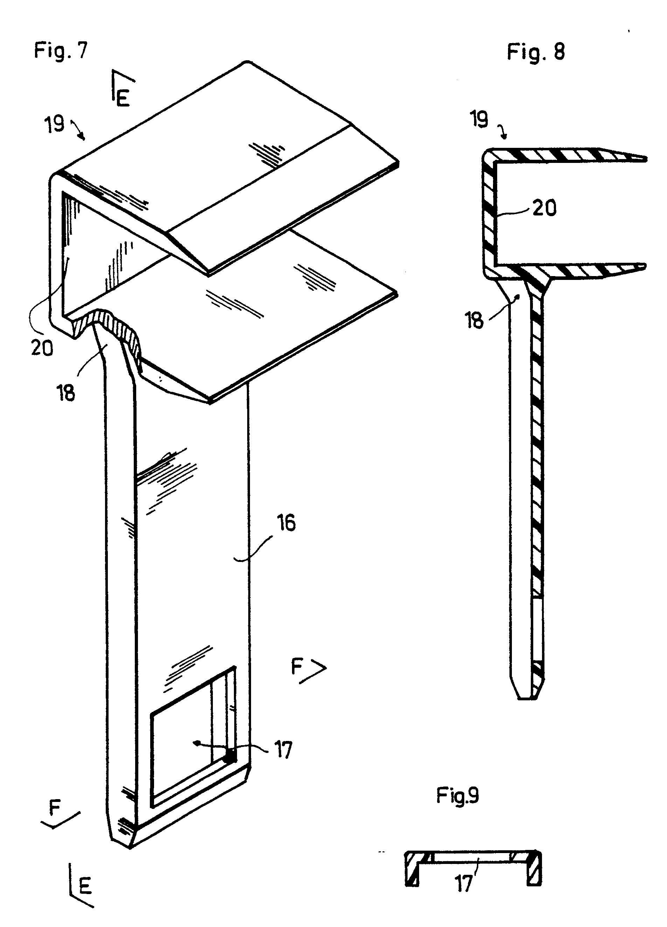

Les moyens de maintien portés par le coulisseau 16 peuvent présenter des formes variées en fonction de l'application du dispositif d'assemblage. Les figures 7, 8 et 11 à 16 illustrent quelques exemples de réalisation de ces moyens de maintien.

Aux figures 7, 8, ces moyens de maintien forment une chape 19 présentant un fond 20 parallèle au plan de la platine. Le dispositif d'assemblage permet alors, par exemple, de supporter des étagères ou des parois horizontales d'un meuble, engagées par coulissement à l'intérieur des chapes 20.

A la figure 11, ces moyens de maintien présentent la forme d'une potence orthogonale au support et dotée à son extrémité libre, d'un embout 22 destiné à loger l'extrémité d'une barre 23 s'étendant parallèlement au support. Il est à noter que la section interne de l'embout 22 peut être de forme quelconque adaptée à toutes formes de barres 23.

La figure 12 représente une variante de l'exemple ci-dessus dans laquelle l'embout 24 sert de logement à l'extrémité d'une barre 25 s'étendant orthogonalement au support.

Les applications de ces deux derniers exemples sont nombreuses : poignée, porte-serviettes, penderie, supports de tringles de rideaux, échelles...

La figure 13 représente un dispositif permettant l'assemblage en angle de deux profilés 26, 29. La platine 1 est alors dotée d'un tenon apte à être logé dans une rainure 27 d'un des profilés 26 ou de tout moyen permettant de la fixer sur ce profilé. Le coulisseau porte quant à lui un embout 28 de jonction destiné à être introduit à l'intérieur du deuxième profilé 29. Cet embout 28 est, en outre, doté d'un pion escamotable 28a ou de tout moyen connu permettant un blocage rigide des deux profilés 26, 29.

La figure 14 représente un dispositif pour l'accrochage d'objets tels que des tableaux. Les moyens de maintien sont alors constitués d'une pièce 30, en l'exemple de forme cylindrique, portée dans le prolongement du coulisseau 16 et dotée d'une gorge annulaire 31 dans laquelle vient se loger la cordelette supportant l'objet.

A la figure 15, l'extrémité du coulisseau présente une lumière 32 permettant d'accrocher des objets divers tels que clefs, laisses, balais...

Le dispositif représenté à la figure 16 est destiné à être utilisé, notamment dans le domaine de l'ameublement pour assembler des panneaux. A cet effet, les organes de maintien sont constitués par une équerre 35 dont les ailes s'étendent selon des plans orthogonaux au plan de la platine 1. Une fois la platine fixée sur un panneau 34, le dispositif permet donc d'assembler en angle deux panneaux 36a, 36b sur le panneau précité 34.

Il est à noter que cette liste d'exemples n'est pas exhaustive, les moyens de maintien pouvant présenter de multiples autres formes en fonction des applications désirées.

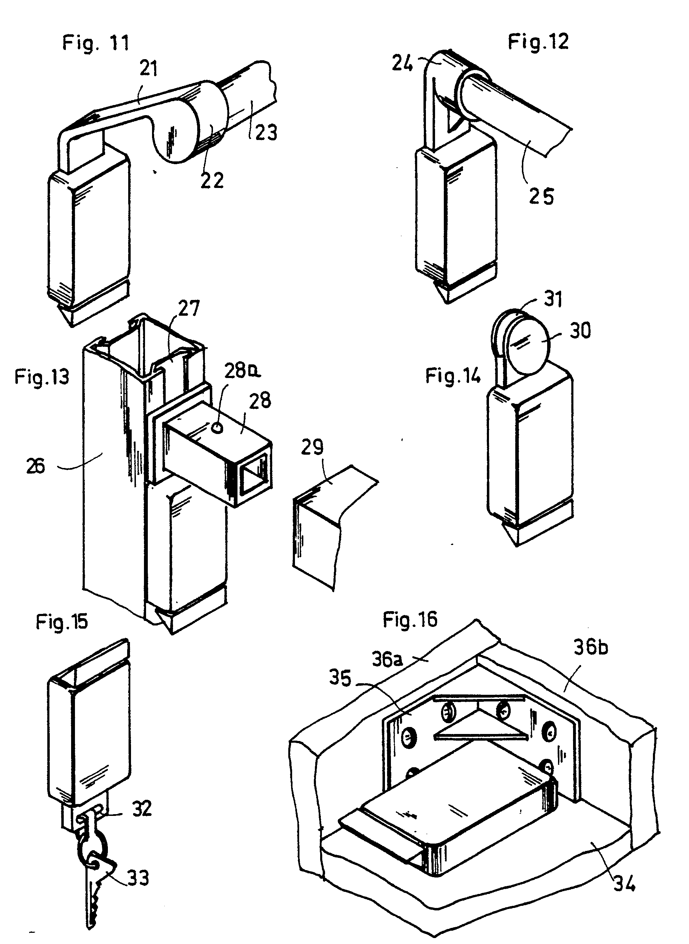

Le dispositif d'assemblage comprend, enfin, un troisième élément représenté à la figure 10 et constitué d'un boîtier 37 de forme adaptée pour loger l'élément femelle, tout en permettant d'accéder à la zone de poussée 8. Ce boîtier de section transversale en forme de U présente, à cet effet, une face d'extrémité basse 38 partiellement ouverte pour le passage du tronçon inférieur 7 de la languette 4.

La fixation du boîtier 37 est assurée par deux crochets d'encliquetage 39 internes venant s'insérer dans des logements 40 ménagés à la base des faces externes des joues latérales 2.

La mise en place d'un tel dispositif d'assemblage est très rapide. En premier lieu, la platine 1 est fixée sur le support au moyen, soit de vis de fixation 9 venant s'insérer aisément entre les entretoises 12, 13, soit d'un ruban adhésif. Le coulisseau 16 est ensuite engagé dans la glissière de l'élément femelle jusqu'à venir s'encliqueter sur l'ergot d'encliquetage 5, position dans laquelle il est bloqué sans jeu grâce à la forme conjugée des extrémités hautes respectives 15, 18 de ce coulisseau 16 et de l'élément femelle. Dans cette position toute translation du coulisseau 16 est impossible : une translation vers le base est interdite par la forme des extrémités hautes 15, 18 du coulisseau 16 et de l'élément femelle, et éventuellement grâce à l'appui des organes de maintien sur les joues latérales 2 et l'entretoise supérieure 12 ; une translation vers le haut est interdite par la coopération de la face inférieure 6 de l'ergot d'encliquetage 5 et le bord inférieur de la lumière 17. En outre, la paroi frontale 12, 13, 14 offre une résistance permettant d'éliminer tout risque d'arrachement du coulisseau 16 hors de la glissière.

La dernière opération consiste enfin à mettre en place le boîtier 37.

Le désassemblage est également très rapide puisque ne nécessitant qu'une pression manuelle sur la zone de poussée 8 avant de dégager le coulisseau 16.

## Revendications

1. Dispositif d'assemblage rapide pour l'accrochage amovible d'un objet (23;25; 29; 33 ;36) sur un support (26 ; 34), du type comportant deux éléments aptes à être solidarisés respectivement auxdits objet et support :
   - un élément, dit femelle, solidarisé au support et comprenant une platine (1) dotée de moyens de fixation (9, 10) adaptés pour l'appliquer et la fixe sur ledit support, ladite platine comportant deux joues latérales (2) formant une glissière,
   - un élément, dit mâle, solidarisé à l'objet et comprenant :
     • un coulisseau (16) de forme adaptée pour coulisser dans la glissière de l'élément femelle,
     • des moyens de maintien (19; 21, 22; 24 ; 28; 30, 31 ; 32 ; 35) de l'objet, portés par le coulisseau (16) et de formes adaptées à la nature et à la forme dudit objet,
       ledit dispositif étant caractérisé en ce que :
   - la platine comprend une languette (4) flexibles s'étandant en saillie et apte à se déformer élastiquement par rapport à ladite platine, ladite lanquette étant dotée d'un ergot (5) d'enclinquetage,
   - le coulisseau ( 1 6 ) comprend une lumière (17) apte à loger l'ergot d'encliquetage (5) de la lanquette (14),
   - la glissière de la platine (1) et le coulisseau (16) présentant respectivement des extrémités, dites hautes, de formes conjuguées et de sections supérieures à celles de leur partie courante, de façon à obtenir un blocage sans jeu dudit coulisseau dans ladite glissière.

2. Dispositif selon la revendication 1, caractérisé en ce que :
   - l'ergot d'encliquetage (5) de la languette (4) et la lumière (17) du coulisseau (16) comportent respectivement une face plane (6) et un bord, dits inférieurs, de formes conjugées, et adaptés pour coopérer selon un plan sensiblement orthogonal au plan de la platine (1),
   - la lanquette (4) comporte un tronçon (7), dit inférieur, agencé de façon à s'étendre dans le prolongement de la platine (1) et présentant une zone de poussée (8) adaptée pour permettre de repousser manuellement ladite lanquette (4) vers ladite platine.

3. Dispositif selon l'une des revendications 1 ou 2, caractérisé en ce que l'élément femelle est doté d'une paroi frontale (12, 13, 14) reliant les joues latérales (2) au niveau des bords latéraux desdites joues opposés à la platine.

4. Dispositif selon la revendication 3, caractérisé en ce que les moyens de fixation de l'élément femelle sur le support comprennent au moins un vis(9) adaptée pour être logée dans un alésage (10) ménagé dans la platine (1), la paroi frontale (12, 13, 14) étant dotée d'une lumière en regard de chacun desdits alésages.

5. Dispositif selon la revendication 4, caractérisé en ce que la platine (1) est percée de deux alésages (10) oblongs ménagés de façon que leurs axes longitudinaux soient orthoganaux.

6. Dispositif selon l'une des revendications 4 ou ,5 caractérisé en ce que chaque alésage (10) débouche au niveau d'un enfoncement (11) ménagé sur la face, dite avant, de la platine (1), opposée au support, et adapté pour définir une portée plane pour une vis de fixation (9) dotée d'une tête ronde.

7. Dispositif selon la revendication 6, caractérisé en ce que le coulisseau (16) présente une section transversale en forme de U adaptée pour dégager un espace entre ledit coulisseau et la face avant de la platine (1), de façon à autoriser une saille des têtes des vis de fixation (9) sur ladite face avant .

8. Diospositif selon la revendication 3, caractérisé en ce que les moyens de fixation de l'élément femelle sur le support comprennent un ruban adhésif apte à adhérer, d'une part, sur la face, dite arrière, de la platine 1, opposée à la lanquette 4 et, d'autre part, sur ledit support.

9. Dispositif selon l'une des revendications précédentes, caractérisé en ce que le coulisseau (16) présente une extrémité longitudinale (18), dite supérieure, présentant une forme pyramidale, de section supérieure à celle de la partie courante dudit coulisseau, l'élément femelle présentant une extrémité (15) de section intérieure conjuguée, de façon à obtenir un blocage sans jeu dudit coulisseau sur ledit élément femelle.

10. Dispositif selon l'une des revendications précédentes, caractérisé en ce qu'il comprend un boîtier (37) amovible de forme adaptée pour loger l'élément femelle, ledit boîtier étant doté latéralement de crochets (39) d'encliquetage internes aptes à s'insérer dans des logements (40) ménagés extérieurement sur les joues latérales (2) dudit élément femelle.

11. Application d'un dispositif d'assemblage conforme à l'une des revendications précédentes pour l'assemblage d'éléments dans le domaine de l'ameublement (panneaux de meubles, profilés, étagères...), pour l'accrochage d'objets divers (tableaux, clefs...) ou pour le support d'objets divers (barres de porte-serviette, poignées, tablettes...).

## Claims

1. Snap action device for detachably fixing an object (23; 25; 29; 33; 36) on to a support (26; 34), of the type comprising two elements capable of being firmly connected with said object and said support, respectively:
   - a so-called female element firmly connected with the support and comprising a plate (1) endowed with securing means (9, 10) so designed as to be applied and fixed to said support, said plate having two side flanges (2) forming a slide track,
   - a so-called male element firmly connected with the object and comprising:
     . a slide body (16) of a shape designed to slide within the slide track of the female element.
     . object retaining means (19; 21, 22; 24; 28; 30, 31; 32; 35) carried by slide body (16) and shaped in accordance with the character and the shape of said object,

   said device being characterised in that
   - the plate comprises a flexible tongue (4) extending so as to project and capable of elastic deformation in relation to said plate, said tongue being endowed with a ratchet lug (5),
   - slide body (16) comprises an aperture (17) capable cf accommodating ratchet lug (5) of tongue (14),
   - the slide track of plate (1) and slide body (16) respectively possess so-called upper ends of matching shapes and with cross-sections larger than those of their standard part so as to achieve blocking without play of said slide body in said slide track.

2. Device according to claim 1, characterised in that
   - ratchet lug (5) of tongue (4) and aperture (17) of slide body (16) comprise, respectively, a so-called lower plane face (6) and a so-called lower edge of matching shapes and so designed as to cooperate along a plane substantially at right angles to the plane of plate (1),
   - tongue (4) comprises a so-called lower section (7), so designed as to extend in extension of plate (1) and having a push zone (8) so designed as to enable said tongue (4) to be pushed back by hand in the direction of said plate.

3. Device according to claims 1 or 2, characterised in that the female element is endowed with a frontal wall (12, 13, 14) connecting lateral flanges (2) at the level of the lateral edges of said flanges opposite to the plate.

4. Device according to claim 3, characterised in that the means for securing the female element to the support comprise at least one screw (9) capable of being accommodated within a hole (10) provided in plate (1), frontal wall (12, 13, 14) being endowed with an aperture opposite each of said holes.

5. Device according to claim 4, characterised in that plate (1) is provided with two oblong holes (10) so designed that their longitudinal axes are at right angles.

6. Device according to one of claims 4 or 5, characterised in that each hole (10) opens out at the level of a recess (11) provided in the so-called front face of plate (1) opposite to the support, said recess being so designed as to define a plane base for a securing screw (9) with a round head.

7. Device according to claim 6, characterised in that slide body (16) has a transverse section in the shape of a U so designed as to provide a space between said slide body and the front face of plate (1), in order to enable the heads of securing screws (9) to project on said front face.

8. Device according to claim 3, characterised in that the means for securing the female element to the support comprise an adhesive tape capable of adhering, on the one hand, to the so-called rear face of plate (1), opposite tongue (4), and, on the other hand, to said support.

9. Device according to one of the preceding claims, characterised in that slide body (16) possesses a so-called upper longitudinal end (18) of pyramidal shape, the cross-section of which is larger than that of the standard part of said slide body, the female element having an end (15) of matching internal section, so as to achieve blocking without play of said slide body in respect of said female element.

10. Device according to one of the preceding claims, characterised in that it comprises a removable case (37) of a shape suitable for accommodating the female element, said case being endowed laterally with internal ratchet hooks (39) so designed as to engage recesses (40) provided on the outside of lateral flanges (2) of said female element.

11. Application of a fixing device according to one of the preceding claims for fixing elements pertaining to the sphere of furniture (furniture panels, fitments, shelves...) for suspending various objects (pictures, keys...) or for supporting various objects (bars of towel rails, handles, plates...).

**Ansprüche**

1. Einschnappbare Vorrichtung zum abnehmbaren Befestigen eines Teils (23; 25; 29; 33; 36) auf einem Träger (26; 34), die so beschaffen ist, daß sie zwei Einheiten umfaßt, die mit dem besagten Teil bzw. dem besagten Träger fest verbunden werden können, und zwar:
   - eine Einheit, die sogenannte aufnehmende Einheit, die mit dem Träger fest verbunden wird und eine Platte (1) mit Befestigungs mitteln (9, 10) umfaßt, die so beschaffen sind, daß sie an dem besagten Träger angebracht und an diesem befestigt werden können, wobei die besagte Platte zwei Seitenflansche (2) umfaßt, so daß eine Gleitführung gebildet wird,
   - eine Einheit, die sogenannte aufgenommene Einheit, die mit dem Teil fest verbunden wird und folgende Teile umfaßt:
      . einen Gleitteil (16), dessen Form so beschaffen ist, daß er in der Gleitführung der aufnehmenden Einheit gleitet,
      . Mittel zum Halten des Teils (19; 21, 22; 24; 28; 30, 31; 32; 35), die an dem Gleitteil (16) angebracht sind und der Beschaffenheit und Form des besagten Teils entsprechende Formen aufweisen,
      wobei die besagte Vorrichtung dadurch gekennzeichnet ist, daß
   - die Platte eine flexible Zunge (4) umfaßt, die sich vorspringend erstreckt und so beschaffen ist, daß sie sich im Verhältnis zu der besagten Platte elastisch verformt, wobei die besagte Zunge mit einem Einrastvorsprung (5) versehen ist,
   - Gleitteil (16) eine Öffnung (17) umfaßt, die so beschaffen ist, daß sie Einrastvorsprung (5) der Zunge (14) aufnimmt,
   - sowohl die Gleitführung der Platte (1) als auch Gleitteil (16) sogenannte obere Enden aufweisen, deren Formen zueinander passen und deren Querschnitte größer sind als die ihres normalen Teils, so daß spielfreie Blockierung des besagten Gleitteils in der besagten Gleitführung bewirkt wird.

2. Vorrichtung nach Anspruch 1, dadurch gekennzeichnet, daß
   - Einrastvorsprung (5) der Zunge (4) und Öffnung (17) des Gleitteils (16) eine sogenannte untere ebene Fläche (6) bzw. einen sogenannten unteren Rand aufweisen, wobei deren Formen zueinander passen und sie so beschaffen sind, daß sie entlang einer im wesentlichen zu der Ebene der Platte (1) senkrechten Ebene miteinander zusammenarbeiten,
   - Zunge (4) einen sogenannten unteren Abschnitt (7) aufweist, der so beschaffen ist, daß er sich in der Verlängerung der Platte (1) erstreckt und eine Drückzone (8) besitzt, die so beschaffen ist, daß sie Zurückpressen von Hand der besagten Zunge (4) auf die besagte Platte zu gestattet.

3. Vorrichtung nach einem der Ansprüche 1 oder 2, dadurch gekennzeichnet, daß die aufnehmende Einheit mit einer Vorderwand (12, 13, 14) versehen ist, die die Seitenflansche (2) in Höhe der von der Platte abgewendeten Seitenränder der besagten Flansche verbindet.

4. Vorrichtung nach Anspruch 3, dadurch gekennzeichnet, daß die Mittel zur Befestigung des aufnehmenden Teils an dem Träger mindestens eine Schraube (9) umfassen, die so beschaffen ist, daß sie in einem Loch (10) in Platte (1) eingesetzt werden kann, wobei die Vorderwand (12, 13, 14) gegenüber jedem der besagten Löcher mit einer Öffnung versehen ist.

5. Vorrichtung nach Anspruch 4, dadurch gekennzeichnet, daß Platte (1) zwei längliche Löcher (10) enthält, die so angeordnet sind, daß ihre Längsachsen senkrecht sind.

6. Vorrichtung nach einem der Ansprüche 4 oder 5, dadurch gekennzeichnet, daß jedes Loch (10) im Bereiche einer Aussparung (11) mündet, die in der von dem Träger abgewandten sogenannten Vorderfläche der Platte (1) vorgesehen und so beschaffen ist, daß sie eine ebene Auflage für eine Befestigungsschraube (9) mit rundem Kopf abgrenzt.

7. Vorrichtung nach Anspruch 6, dadurch gekennzeichnet, daß Gleitteil (16) einen U-förmigen Querschnitt aufweist, der so beschaffen ist, daß er zwischen dem besagten Gleitteil und der Vorderfläche der Platte (1) einen Raum bildet, um Vorstehen der Köpfe der Befestigungsschrauben (9) an der besagten Vorderfläche zu ermöglichen.

8. Vorrichtung nach Anspruch 3, dadurch gekennzeichnet, daß die Mittel zur Befestigung der aufnehmenden Einheit an dem Träger einen Klebstreifen umfassen, der so beschaffen ist, daß er einerseits an der sogenannten hinteren, von Zunge (4) abgewandten Fläche der Platte (1) und andererseits an dem besagten Träger anhaftet.

9. Vorrichtung nach einem der vorstehenden Ansprüche, dadurch gekennzeichnet, daß Gleitteil (16) ein sogenanntes oberes Längsende (18) von Pyramidenform besitzt, dessen Querschnitt größer ist als der des Normalteils des besagten Gleitteils, wobei die aufnehmende Einheit ein Ende (15) mit dazu passendem Innenprofil besitzt, so daß zwischen dem Gleitteil und der besagten aufnehmenden Einheit spielfreie Blockierung erzielt wird.

10. Vorrichtung nach einem der vorstehenden Ansprüche, dadurch gekennzeichnet, daß sie ein abnehmbares Gehäuse (37) umfaßt, deren Form so beschaffen ist, daß sie die aufnehmende Einheit aufnimmt, wobei das besagte Gehäuse seitlich mit inneren Einrasthaken (39) versehen ist, die so beschaffen sind, daß sie in Aufnahmebereiche (40) außen an den Seitenflanschen (2) der besagten aufnehmenden Einheit eingreifen.

11. Anwendung einer Befestigungseinheit nach einem der vorstehenden Ansprüche zum Befestigen von Teilen des Möbelbereiches (Möbeltafeln, Profilen, Regalen...) zum Aufhängen von verschiedenen Teilen (Bildern, Schlüsseln...) bzw. zum Abstützen von verschiedenen Teilen (Stangen von Handtuchhaltern, Griffen, Platten...).

Fig. 1

Fig. 2

Fig. 3

Fig. 4

EP 0 277 379 B1

Fig.5

Fig. 6

Fig. 10

D

15

12

10

1

13

11

2

10

3

4

5

14

7

8

D

15

11

12

10

13

10

11

2

1

4

5

14

6

7

8

39

37

38

EP 0 277 379 B1

Fig. 7

Fig. 8

Fig.9

Fig. 11

21

22

23

Fig.12

24

25

Fig.13

27

28a

28

26

29

Fig.14

31

30

Fig.15

32

33

Fig.16

35

36a

36b

34